# EUROPEAN PATENT APPLICATION

(11) **EP 1 908 729 A1**
(43) Date of publication of application: **09.04.2008**
(21) Application number: 06782583.6
(22) Date of filing: 09.08.2006
(51) Int. Cl.: C01B 3/08, H01M 8/04, H01M 8/06, H01M 8/10

(54) **HYDROGEN-GENERATING MATERIAL AND HYDROGEN GENERATION APPARATUS**

(30) Priority: 11.08.2005 JP 2005233648; 01.11.2005 JP 2005318881; 19.05.2006 JP 2006140690
(71) Applicant: HITACHI MAXELL, LTD., Ibaraki-shi, Osaka 567-8567 (JP)
(72) Inventor: MIKI, Takeshi, Osaka 567-8567 (JP); NAKAI, Toshihiro, Osaka 567-8567 (JP); NAGAI, Ryo, Osaka 567-8567 (JP); SAIBARA, Shoji, Osaka 567-8567 (JP)
(74) Representative: Menges, Christian Alexander
(86) International application number: PCT/JP2006/315767
(87) International publication number: WO 2007/018244

(57) **Abstract**

A hydrogen generating material of the present invention includes a metal material that reacts with water to generate hydrogen, and a heat generating material that reacts with water to generate heat and is a material other than the metal material. The heat generating material is unevenly distributed with respect to the metal material. The hydrogen generating material has a plurality of regions that differ in content of the heat generating material. The content of the heat generating material is preferably 30 wt% to 80 wt% in a region with the highest content of the heat generating material. A hydrogen generator of the present invention includes the hydrogen generating material and a vessel containing the hydrogen generating material. The vessel can accommodate another inner vessel.

## Description

### Technical Field

The present invention relates to a hydrogen generating material that reacts with water to produce hydrogen, and a hydrogen generator using the hydrogen generating material.

### Background Art

With the recent widespread use of cordless equipment such as a personal computer or portable telephone, batteries used as a power source of cordless equipment are increasingly required to have a smaller size and higher capacity. At present, a lithium ion secondary battery that can achieve a small size, light weight, and high energy density is being put to practical use and growing in demand as a portable power source. However, the lithium ion secondary battery has a problem of not being able to ensure a sufficient continuous available time for some cordless equipment.

To solve this problem, e.g., fuel cells such as a polymer electrolyte fuel cell (PEFC) are being developed. The fuel cells can be used continuously as long as a fuel and oxygen are supplied. The PEFC uses a polymer electrolyte membrane as an electrolyte, oxygen in the air as a positive active material, and a fuel as a negative active material, and has attracted considerable attention because it is a battery that can have a higher energy density than the lithium ion secondary battery.

Although there are several candidates for fuels used for the PEFC, the individual fuels have technical problems. A direct methanol fuel cell (DMFC), in which methanol is used as a fuel and allowed to react directly at the electrode, is miniaturized easily and expected to be a future portable power source. In the DMFC, however, the voltage is reduced due to crossover in which methanol at the negative electrode passes through the solid electrolyte and reaches the positive electrode, and thus a high energy density cannot be achieved. On the other hand, when hydrogen is used as a fuel, a fuel cell with a high-pressure tank holding hydrogen or a hydrogen-storing alloy tank is employed to some extent. However, the fuel cell using such a tank is not suitable for a portable power source, since both the volume and the weight of the fuel cell are increased, and the energy density is reduced. Moreover, when a hydrocarbon fuel is used, there is a cell with a reformer for reforming the fuel to extract hydrogen. However, this type of cell requires supply of heat to the reformer, thermal insulation of the reformer, and the like. Therefore, the cell is not suitable for a portable power source either.

Under these circumstances, a fuel cell has been proposed that produces hydrogen by the chemical reaction of water and a hydrogen generating substance such as aluminum, magnesium, silicon, or zinc at a low temperature of 100°C or less, and uses the hydrogen thus produced as a fuel (see, e.g., Patent Documents 1 to 3). Moreover, an apparatus is known in which a small container including iron powder is placed in a large container including iron powder, and heat is generated by introducing air into the large container, while hydrogen is produced by adding water to the small container (see, e.g., Patent Document 4).

Patent Document 1: US 6,506,360
Patent Document 2: JP 2566248 B2
Patent Document 3: JP 2004-231466 A
Patent Document 4: JP 2005-317443 A

In the methods of Patent Documents 1 to 3, however, the equivalent amount of a basic substance (e.g., a calcium oxide or sodium hydroxide) corresponding to the amount of the hydrogen generating substance needs to be added. The energy density decreases as the proportion of the substance other than the hydrogen generating substance increases, leading to a reduction in the amount of hydrogen generated. In particular, the method of Patent Document 3 uses heat generated by the reaction of a calcium oxide and water for the reaction of the hydrogen generating substance. It has been clear that although the hydrogen production reaction proceeds successfully if the calcium oxide content is 15 wt% or more, no hydrogen is produced if the calcium oxide content is less than 15 wt%.

The method of Patent Document 4 can produce hydrogen without the addition of a basic substance, as used in Patent Document 3. However, the temperature of the system is increased to 200°C to 400°C because the heat of reaction is large. Moreover, it is difficult to reduce the weight of the apparatus. Therefore, this apparatus is not suitable for a portable power source.

The present inventors studied the generation of hydrogen using a hydrogen generating material that was obtained by mixing a heat generating material such as a calcium oxide and a hydrogen generating substance uniformly. The results showed that the time it takes to start generating hydrogen and the time it takes for the hydrogen generation rate to reach a maximum differ significantly depending on the weight ratio of the hydrogen generating substance to the heat generating material. Specifically, it became evident that if the content of the heat generating material is 30 wt% or more with respect to the total volume of the hydrogen generating substance and the heat generating material, both the time before starting the generation of hydrogen and the time required for maximizing the hydrogen generation rate can be reduced considerably, compared to the content of the heat generating material of less than 30 wt%. This may be because the amount of heat generated by the reaction of the heat generating material and water is increased, thereby accelerating the reaction of the hydrogen generating substance and water.

However, when the content of the heat generating material in the hydrogen generating material is increased, the proportion of the hydrogen generating substance (hydrogen source) is reduced, resulting in a low energy density. Accordingly, the amount of hydrogen generated is reduced. On the other hand, when the content of the heat generating material is reduced, it takes time before hydrogen starts to be generated. In addition, the reaction product is deposited on the surface of the hydrogen generating substance as the reaction proceeds, and may interfere with the hydrogen production reaction. Therefore, even if the proportion of the hydrogen generating substance is high, the reaction efficiency is not necessarily improved. Thus, the studies revealed that there are still some problems to be solved.

### Disclosure of Invention

A hydrogen generating material of the present invention includes a metal material that reacts with water to generate hydrogen, and a heat generating material that reacts with water to generate heat and is a material other than the metal material. The heat generating material is unevenly distributed with respect to the metal material.

A hydrogen generator of the present invention includes a hydrogen generating material and a vessel containing the hydrogen generating material. The hydrogen generating material includes a metal material that reacts with water to generate hydrogen, and a heat generating material that reacts with water to generate heat and is a material other than the metal material. The heat generating material is unevenly distributed with respect to the metal material.

In the hydrogen generating material of the present invention, the heat generating material is unevenly distributed with respect to the metal material, namely, the content of the heat generating material is higher in some regions than in others of the hydrogen generating material. Thus, heat generated by the reaction of the heat generating material in those regions and water can be utilized effectively for the reaction of the metal material and water, so that the hydrogen production reaction can start easily in a short time. Therefore, the amount of the heat generating material can be reduced in the whole hydrogen generating material. In other words, the hydrogen generating material of the present invention can increase the content of the metal material that serves as a hydrogen source, and thus allows hydrogen to be produced efficiently.

The hydrogen generator of the present invention can produce hydrogen efficiently by using the above hydrogen generating material.

### Brief Description of Drawings

FIG. 1 is a schematic cross-sectional view showing an example of a hydrogen generator of the present invention.
FIG. 2 is a schematic cross-sectional view showing an example of a fuel cell that is to be combined with a hydrogen generator of the present invention.
FIG. 3 is a schematic cross-sectional view showing another example of a hydrogen generator of the present invention.
FIG. 4 is a schematic cross-sectional view showing yet another example of a hydrogen generator of the present invention.
FIG. 5 is a graph showing (a) a change in surface temperature of a vessel over time and (b) a change in hydrogen generation rate over time in a hydrogen generator of Working Example 1.
FIG. 6 is a graph showing (a) a change in surface temperature of a vessel over time and (b) a change in hydrogen generation rate over time in a hydrogen generator of Comparative Example 1.
FIG. 7 is a graph showing (a) a change in surface temperature of an outer vessel over time and (b) a change in hydrogen generation rate over time in a hydrogen generator of Working Example 6.

### Best Mode for Carrying Out the Invention

Hereinafter, a hydrogen generating material and a hydrogen generator using the hydrogen generating material of the present invention will be described.

### Embodiment 1

A hydrogen generating material of an example of the present invention reacts with water to produce hydrogen. This hydrogen generating material includes a metal material that reacts with water to generate hydrogen, and a heat generating material that reacts with water to generate heat and is a material other than the metal material. In the hydrogen generating material of the present invention, the heat generating material is unevenly distributed with respect to the metal material.

The hydrogen generating material with the above configuration allows hydrogen to be produced efficiently, even if the amount of the heat generating material included in the hydrogen generating material is reduced.

The reaction of the hydrogen generating material and water is not particularly limited by a reaction mechanism or the like as long as the reaction can produce hydrogen. In an example of this reaction, first, an exothermic reaction of the heat generating material and water occurs in a region with a higher content of the heat generating material. Then, heat generated by the exothermic reaction causes the metal material present in the region where the exothermic reaction has occurred or its vicinity to start reacting with water. Since this reaction of the metal material and water also is an exothermic reaction, once the reaction has started, hydrogen can continue to be produced, even if the amount of heat supplied from the reaction of the heat generating material and water is reduced. Thus, the hydrogen production reaction can proceed gradually from the region with a higher content of the heat generating material to the other regions, and finally can occur throughout the hydrogen generating material.

Therefore, except for the region with a higher content of the heat generating material, the hydrogen generating material may include either no or a small amount of heat generating material. Consequently, the amount of the heat generating material can be reduced in the whole hydrogen generating material. Since the hydrogen generating material has the region with a higher content of the heat generating material, a large amount of heat is generated locally as soon as water is supplied to the region, and the heat induces the reaction of the metal material and water. Accordingly, both the time before starting the generation of hydrogen and the time required for maximizing the hydrogen generation rate also can be reduced.

In the hydrogen generating material of the present invention, the metal material and the heat generating material can be combined in various ways as long as the heat generating material is unevenly distributed. For example, (1) the hydrogen generating material may be a mixture of the metal material and the heat generating material, and the content of the heat generating material is higher in some regions than in others; (2) the hydrogen generating material may include a mixture of the metal material and the heat generating material, and there are some regions where only the metal material or the heat generating material is present; or (3) the hydrogen generating material may include a region consisting of the metal material and a region consisting of the heat generating material.

The shape of the hydrogen generating material is not particularly limited. For example, (i) the hydrogen generating material may include the metal material and the heat generating material respectively in the form of particles, granules, or pellets; (ii) the hydrogen generating material may include secondary particles composed of a particulate metal material and a particulate heat generating material; or (iii) the hydrogen generating material may be molded into pellets or granules, each of which includes the metal material and the heat generating material. In particular, the pellet or granular hydrogen generating material is more preferred because of its excellent portability. When the hydrogen generating material is formed into pellets by compression molding, the packing density is improved, and the energy density is increased. On the other hand, when the hydrogen generating material is granulated into granules, the particle size is controlled easily. For example, if the particle size of the hydrogen generating material is 5 µm to 300 µm, the time before starting the generation of hydrogen can be reduced.

It is preferable that the content of the heat generating material present in any one of locations selected from the end portion, the core portion, and the surface portion of the hydrogen generating material is higher than that of the heat generating material present in the other locations.

For example, when the hydrogen generating material is formed into pellets or granules, the end portion of the hydrogen generating material indicates a part of the surface or its vicinity of a pellet or granule, and the surface portion of the hydrogen generating material indicates a part of the surface of the pellet or granule. When the hydrogen generating material including a particulate metal material and a particulate heat generating material is placed in a container, the end portion of the hydrogen generating material indicates a region that is in contact with or in the vicinity of a part of the inside surface of the container, and the surface portion of the hydrogen generating material indicates a region that is in contact with a part of the inside surface of the container. If the end or surface portion of the hydrogen generating material has a higher content of the heat generating material, water can be supplied first to those locations, and then quickly brought into contact with the heat generating material during the process of producing hydrogen (which will be described later), thereby allowing the hydrogen production reaction to start in a short time.

On the other hand, the core portion of the hydrogen generating material in the form of pellets or granules indicates a center or a portion around the center of a pellet or granule. When the hydrogen generating material including the particulate metal material and the particulate heat generating material is placed in a container, the core portion indicates a center or a region around the center of the container. If the core portion of the hydrogen generating material has a higher content of the heat generating material, it takes some time for water to reach the core portion during the process of producing hydrogen (which will be described later). Therefore, compared to the hydrogen generating material with a higher content of the heat generating material in the end or surface portion, the hydrogen production reaction takes longer to start. However, heat generated in the core portion of the hydrogen generating material is not likely to be dissipated to the outside and is accumulated inside the material, so that the temperature of the metal material can be increased more efficiently. Thus, the reaction of the metal material and water can be maintained more stably.

To produce a pellet hydrogen generating material, the process of injecting the hydrogen generating material into a die may be divided into a plurality of steps so that a portion with a high content of the heat generating material is formed. To produce a granular hydrogen generating material, the hydrogen generating material may be granulated while injecting the material at several different times. In this manner, the proportion of the heat generating material can be changed between the surface portion and the core portion of each granule.

The content of the metal material in the hydrogen generating material of the present invention is preferably 85 wt% to 99 wt%, and more preferably 90 wt% to 97 wt%. By controlling the content of the metal material within these ranges, a large amount of hydrogen can be produced. This content is a weight percentage of the metal material when the total weight of the metal material and the heat generating material in the whole hydrogen generating material is expressed as 100.

The metal material of the present invention is not particularly limited as long as it can react with water to generate hydrogen by heating. The metal material is preferably at least one metal selected from aluminum, silicon, zinc, and magnesium or an alloy thereof. The alloy may have any composition, but preferably includes the element selected from the above group of metals as the main component. The content of the element is preferably 80 wt% or more, and more preferably 85 wt% or more. If the content of the element is low, the amount of hydrogen generated by the reaction of the metal material and water is reduced.

The metal material can react with water to generate hydrogen by heating at room temperature or higher. However, since a stable oxide film is formed on the surface of the metal material, it is impossible or difficult to generate hydrogen if the temperature is low, or the metal material is in the form of a bulk such as a plate or block. On the other hand, the metal material can be handled easily in the air due to the presence of the oxide film.

For example, the reaction of aluminum, which is one of the metal material, and water may be expressed as any one of the following formulas (1) to (3).

2Al + 6H₂O → Al₂O₃·3H₂O + 3H₂ (1)

2Al + 4H₂O → Al₂O₃·H₂O + 3H₂ (2)

2Al + 3H₂O → Al₂O₃ + 3H₂ (3)

Although the metal material is not particularly limited by its particle size, the particle size may be 100 µm or less, and preferably 50 µm or less because the smaller the particle size is, the better the rate of reaction becomes. In the particle size distribution of the metal material, particles with a particles size of 0.1 µm to 60 µm are present preferably in a proportion of 80 vol% or more, and more preferably in a proportion of 90 vol% or more of the whole metal material. It is most preferable that all the metal material particles have a particle size within the above range. The average particle size of the metal material is preferably 0.1 µm to 30 µm, and more preferably 0.1 µm to 20 µm. The metal material with these particle sizes can be obtained easily by classification using a sieve.

The reaction of the metal material in the bulk state and water does not proceed easily. However, when the particle size of the metal material is small (e.g., 100 µm or less), the effect of suppressing the reaction due to the oxide film is reduced, so that the reactivity with water can be improved by further heating. Thus, the hydrogen production reaction can be sustained. On the other hand, if the average particle size of the metal material is less than 0.1 µm, it is difficult to handle the metal material in the air because the ignitability is enhanced. Moreover, since the bulk density of the hydrogen generating material is reduced, the packing density is reduced, and thus the energy density is likely to be low. Therefore, it is desirable that the average particle size of the metal material is 0.1 µm or more. In other words, the metal material having the above particle size distribution and average particle size is less affected by the oxide film and can generate hydrogen efficiently.

In this specification, the average particle size means a value of 50% diameter of an accumulated volume percentage, i.e., d₅₀. Also, the particle size distribution and the average particle size are measured by a laser diffraction scattering method. According to this method, specifically, the measuring object is dispersed in a liquid phase such as water and irradiated with a laser beam to detect scattering intensity distribution, and the particle size distribution is measured using the scattering intensity distribution.
The measuring device for the laser diffraction scattering method may be, e.g., "MICROTRAC HRA" manufactured by Nikkiso Co., Ltd.

The metal material is preferably flake particles, and more preferably the flake particles having, e.g., a major axis of several tens of micrometers and a thickness of 0.1 µm to 5 µm. By reducing the thickness of the metal material, it is considered that the effect of the formation of the oxide film is reduced, and the reaction with water proceeds easily to the particle core.

To make it easier for the metal material to react with water, it is preferable not to form an aggregate that consists of the metal material and has a size of 1 mm or more. The formation of such an aggregate can be suppressed, e.g., by mixing and stirring the metal material and the heat generating material or by coating the metal material with the heat generating material in the manufacturing process of the hydrogen generating material.

The heat generating material may be any substance as long as it causes an exothermic reaction with water at room temperature. For example, a substance that reacts with water to form a hydroxide or hydrate, or a substance that reacts with water to generate hydrogen can be used. In this specification, the room temperature means a temperature in the range of 20°C to 30°C. Examples of the substance that reacts with water to form a hydroxide or hydrate include oxides of alkali metals (such as a lithium oxide), oxides of alkaline-earth metals (such as a calcium oxide and magnesium oxide), chlorides of alkaline-earth metals (such as a calcium chloride and magnesium chloride), and sulfuric acid compounds of alkaline-earth metals (such as a calcium sulfate). Examples of the substance that reacts with water to generate hydrogen include alkali metals (such as lithium and sodium) and alkali metal hydrides (such as a sodium borohydride, potassium borohydride and lithium hydride). These substances may be used individually or in combination of two or more. If the heat generating material is a basic substance, it is dissolved in water to form a high concentration alkaline aqueous solution. This alkaline aqueous solution dissolves the oxide film formed on the surface of the hydrogen generating substance, so that the reactivity with water can be improved significantly. The dissolution of the oxide film may be a starting point of the reaction of the metal material and water. In particular, if the heat generating material is an alkaline-earth metal oxide, it has the advantages of being easy to handle as well as being a basic substance.

There is also a substance that causes an exothermic reaction with a substance other than water at room temperature. For example, a substance such as iron powder that reacts with oxygen to generate heat has been known. However, if the hydrogen generating material includes the substance reacting with oxygen and the metal material as a hydrogen source, the oxygen required for the exothermic reaction may decrease the purity of hydrogen generated from the metal material or oxidize the metal material, thus reducing the amount of hydrogen generated. In the present invention, therefore, it is preferable to use the heat generating material selected from the above oxides or the like of alkaline-earth metals that react with water to generate heat. For the same reason, it is also preferable to use the heat generating material that does not generate any gas other than hydrogen during the reaction.

Although the heat generating material is not particularly limited by its particle size, the particle size may be 0.1 µm to 200 µm, preferably 0.1 µm to 60 µm, and more preferably 0.1 µm to 20 µm. The smaller the particle size is, the better the rate of reaction becomes. If the particle size of the heat generating material is less than 0.1 µm, it is difficult to handle the heat generating material. Moreover, the packing density of the hydrogen generating material is reduced, and thus the energy density is likely to be low. Therefore, it is preferable that the particle size of the heat generating material is controlled within the above ranges.

The hydrogen generating material further may include at least one selected from a hydrophilic oxide, carbon, and a water absorbing polymer (referred to as additives in the following). By using the additives with the metal material, the reaction of the metal material and water can be accelerated to produce hydrogen efficiently. This is because the additives may serve to improve contact between the hydrogen generating material and water or to prevent deposition of the reaction product formed by the reaction of the hydrogen generating material and water on the surface of the unreacted metal material. When the hydrogen generating material is formed into pellets, it is also expected that the additives may assist water in penetrating into the pellets. Examples of the hydrophilic oxide include alumina, boehmite, silica, magnesia, zirconia, zeolite, and a zinc oxide. The hydrogen generating material may include at least one selected from these oxides. Examples of the carbon include carbon black such as acetylene black or Ketjen black, graphite, easily-graphitizable carbon, hardly-graphitizable carbon, and activated carbon. Examples of the water absorbing polymer include cellulose such as carboxymethyl cellulose, polyvinyl pyrrolidone, polyvinyl alcohol, and polyacrylic acid. These additives may be used individually or in combination of two or more.

The hydrogen generating material of the present invention preferably includes at least one selected from an aluminum powder and aluminum alloy powder as the metal material. More preferably, the hydrogen generating material further includes alumina or boehmite as the hydrophilic oxide.

### Embodiment 2

A hydrogen generating material of another example of the present invention reacts with water to produce hydrogen. This hydrogen generating material includes a hydrogen generating material A and a hydrogen generating material B independently. The hydrogen generating material A includes a metal material that reacts with water to generate hydrogen, and a heat generating material that reacts with water to generate heat and is a material other than the metal material. The hydrogen generating material B has a lower content of the heat generating material than the hydrogen generating material A.

The reaction of the hydrogen generating material and water is not particularly limited by a reaction mechanism or the like as long as the reaction can produce hydrogen. In an example of this reaction, first, an exothermic reaction of the heat generating material and water occurs in the hydrogen generating material A. Then, heat generated by the exothermic reaction causes the metal material included in the hydrogen generating material A to start reacting with water. Next, the heat of reaction in the hydrogen generating material A is transferred to the hydrogen generating material B adjacent to the hydrogen generating material A. This heat transfer provides a starting point from which the hydrogen production reaction starts in the hydrogen generating material B.

The hydrogen generating material B may include either no heat generating material or a significantly lower content of the heat generating material than the hydrogen generating material A. Therefore, the amount of the heat generating material can be reduced in the whole hydrogen generating material, compared to when the heat generating material is uniformly distributed. Thus, the proportion of the metal material can be increased, resulting in a larger amount of hydrogen generated. Alternatively, even if the amount of the heat generating material is not reduced, both the time before starting the generation of hydrogen and the time required for maximizing the hydrogen generation rate can be reduced. In either case, the hydrogen generation efficiency can be improved.

The hydrogen generating material of this embodiment can use the same materials and sizes as those of the metal material and the heat generating material in Embodiment 1, and also can use the additives as described in Embodiment 1.

In this embodiment, it is desirable that the hydrogen generating material A is located in the surface or the corner of the whole hydrogen generating material. With this arrangement, water can be supplied first to the hydrogen generating material A, and then quickly brought into contact with the heat generating material included in the hydrogen generating material A, thereby allowing the hydrogen production reaction to start in a short time. If the hydrogen generating material A is surrounded by the hydrogen generating material B, and preferably is located in the center of the whole hydrogen generating material, the reaction of the metal material and water can be maintained more stably. When water is supplied to the hydrogen generating material, it takes some time for water to reach the hydrogen generating material A. However, heat generated in the hydrogen generating material A is not likely to be dissipated to the outside and is accumulated inside the hydrogen generating material, so that the temperature of the metal material can be increased more efficiently.

When the hydrogen generating material of the present invention has a plurality of regions that differ in content of the heat generating material, the content of the heat generating material is preferably 30 wt% to 80 wt%, and more preferably 35 wt% to 65 wt% in the region with the highest content of the heat generating material. In the case of this embodiment, it is preferable that the content of the heat generating material in the hydrogen generating material A is within the above ranges. This can further reduce the time it takes to start generating hydrogen as a result of the reaction of the heat generating material.

It is preferable that the proportion of the region with the highest content of the heat generating material in the whole hydrogen generating material, i.e., the ratio of the hydrogen generating material in the region with the highest content of the heat generating material to the whole hydrogen generating material is 3 wt% to 40 wt%. In the case of this embodiment, it is preferable that the content of the hydrogen generating material A in the whole hydrogen generating material is within the above range. Thus, hydrogen can be produced efficiently.

The hydrogen generating material B may include only the metal material. However, it is preferable that the hydrogen generating material B includes the heat generating material to accelerate the reaction of the metal material and water. In such a case, if the content of the heat generating material in the hydrogen generating material B is too high, it may be difficult to obtain the effect of reducing the amount of the heat generating material in the whole hydrogen generating material. Therefore, the content of the heat generating material is lower in the hydrogen generating material B than in the hydrogen generating material A. Specifically, the content of the heat generating material in the hydrogen generating material B is 1 wt% to 15 wt%.

At least one of the hydrogen generating materials A and B is preferably granular in shape. The granular hydrogen generating material may be formed simply by granulating the material into granules. Therefore, the particle size can be controlled easily. For example, if the particle size of the hydrogen generating material is 5 µm to 300 µm, the time before starting the generation of hydrogen can be reduced.

### Embodiment 3

In the present invention, the hydrogen generating material reacts with water to produce hydrogen. An example of the method for producing hydrogen will be described below. There is no particular limitation to the process of preparing the hydrogen generating material. For example, the hydrogen generating material that is formed into pellets and has a higher content of the heat generating material in its end portion may be placed in a reaction vessel. In another process, a metal material powder and a heat generating material powder may be put into a reaction vessel separately, and then mixed as needed. At this time, the amount of each powder or the timing of putting each powder into the reaction vessel may be adjusted so that the content of the heat generating material is higher in a portion of the hydrogen generating material in the reaction vessel. Alternatively, a plurality of types of hydrogen generating materials with different contents of the heat generating material may be prepared by mixing the metal material and the heat generating material beforehand, and each of the hydrogen generating materials may be put into a reaction vessel separately.

The process of supplying water to the hydrogen generating material thus prepared is not particularly limited as long as the hydrogen generating material can react with water. Thus, the location inside the reaction vessel where water is supplied, the supply rate of water, or the like can be selected appropriately. In this process, the supplied water reacts with the heat generating material in the hydrogen generating material, and heat liberated from this reaction causes the metal material to start reacting with water. Moreover, the heat generated by the reaction of the heat generating material or the heat generated by the reaction of the metal material and water can provide a starting point from which a reaction of another metal material and water starts, and thus the hydrogen production reaction continues to proceed.

It is preferable that water is supplied first to the portion of the hydrogen generating material having a higher content of the heat generating material so that the supplied water can react efficiently with the heat generating material and the metal material. In this manner, if the amount of heat required for the hydrogen production reaction to start is generated first, the subsequent reaction can proceed efficiently For example, in the case of Embodiment 2, water may be supplied first to the hydrogen generating material A placed in the reaction vessel.

### Embodiment 4

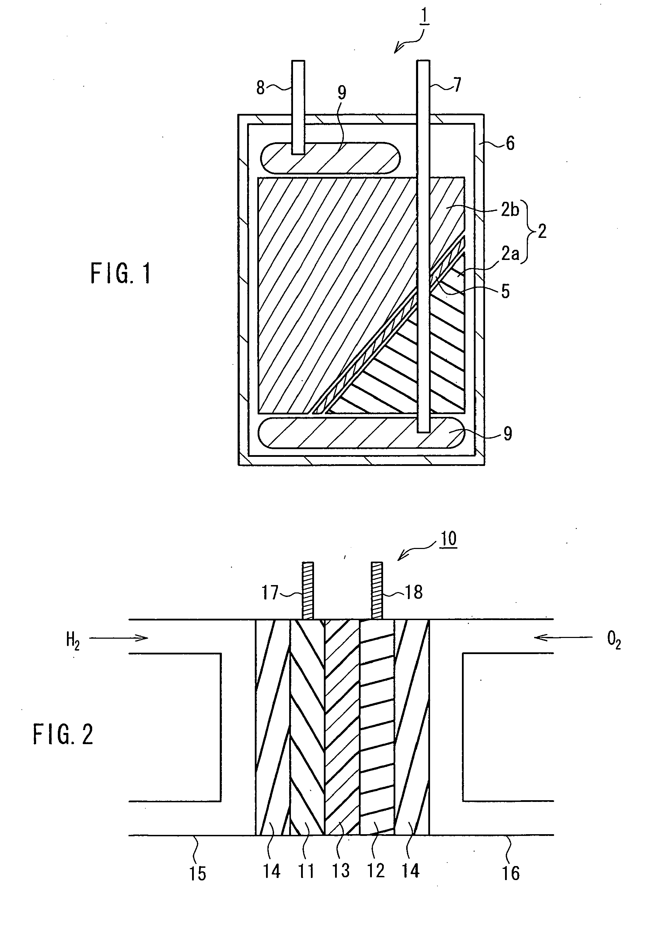

An example of a hydrogen generator of the present invention will be described in detail with reference to the drawings. FIG. 1 is a schematic cross-sectional view of a hydrogen generator including a vessel that contains a hydrogen generating material. The hydrogen generating material includes a metal material that reacts with water to generate hydrogen, and a heat generating material that reacts with water to generate heat and is a material other than the metal material. The heat generating material and the metal material are arranged in the vessel so that the heat generating material is unevenly distributed with respect to the metal material. The hydrogen generator of FIG. 1 is in the form of a cartridge. In FIG. 1, a cartridge 1 includes a vessel 6 with an inlet 7 through which water is supplied and an outlet 8 through which hydrogen is discharged. A hydrogen generating material 2 including two types of hydrogen generating materials 2a, 2b is placed in the vessel 6. The hydrogen generating materials 2a and 2b correspond to the hydrogen generating materials A and B in Embodiment 2, respectively.

The cartridge 1 with the above configuration can produce hydrogen efficiently, even if the amount of the heat generating material included in the hydrogen generating material 2 is reduced. The cartridge 1 is suitable particularly for carrying out the production method of hydrogen in Embodiment 3.

The hydrogen generating materials 2a, 2b may include the same materials as the metal material and the heat generating material used in Embodiment 2. Moreover, a partitioning material 5 may be arranged between the hydrogen generating materials 2a, 2b to prevent mixing of the two materials. The partitioning material 5 may be any material that does not interfere with the reaction of the hydrogen generating materials 2a, 2b and water nor the transfer of heat generated in the hydrogen generating material 2a to the hydrogen generating material 2b. For example, aluminum foil, stainless steel foil, or copper foil can be used.

The size and shape of the vessel 6 are not particularly limited. However, since the vessel 6 is used as a reactor in which the reaction of the hydrogen generating material and water takes place, it is desirable that the vessel 6 can be hermetically sealed, except for the water inlet 7 and the hydrogen outlet 8, to prevent leakage of the supplied water and the generated hydrogen to the outside. A material suitable for the vessel 6 is substantially impermeable to water and hydrogen and has heat resistance (high enough not to cause any failure, even if the vessel is heated, e.g., at about 120°C). Examples of the material include metals such as aluminum, titanium and nickel, resins such as polyethylene, polypropylene and polycarbonate, ceramics such as alumina, silica and titania, and heat-resistance glass.

The structure of the inlet 7 is not particularly limited as long as water can be supplied from the outside. For example, the inlet 7 may be either an opening formed in the vessel 6 or a pipe connected to the vessel 6. It is preferable that the inlet 7 is connected to a pump capable of controlling the water supply, since the amount of hydrogen generated can be controlled by adjusting the water supply.

The structure of the outlet 8 is not particularly limited as long as hydrogen is discharged to the outside. For example, the outlet 8 may be either an opening formed in the vessel 6 or a pipe connected to the vessel 6. The outlet 8 also may be provided with a filter to prevent the contents of the vessel 6 from getting out. The filter is not particularly limited as long as it transmits gas and substantially rejects liquid and solid. For example, a porous gas-liquid separation film made of polytetrafluoroethylene (PTFE) or porous film made of polypropylene can be used.

As shown in FIG. 1, a water absorbing member 9 may be arranged at the end of each of the inlet 7 and the outlet 8 inside the vessel 6. Apart of the supplied water is held by the water absorbing member 9, and the remaining water wets the hydrogen generating material, thereby allowing the hydrogen production reaction to start. The generated hydrogen can be fed to the negative electrode of a fuel cell through the outlet 8. Although the water absorbing member 9 is not necessarily required, the water held by the water absorbing member 9 is supplied in accordance with the water consumption in the hydrogen production reaction, so that fluctuations in the hydrogen generation rate over time can be suppressed to some extent. Thus, it is desirable to use the water absorbing member 9. The water absorbing member 9 is not particularly limited as long as it can absorb and hold water, and may be absorbent cotton or nonwoven fabric in general.

### Embodiment 5

An example of a fuel cell that is to be combined with a hydrogen generator of the present invention will be described with reference to the drawings. FIG. 2 is a schematic cross-sectional view showing an example of a fuel cell. A fuel cell 10 includes a membrane electrode assembly that includes a positive electrode 12 for reducing oxygen, a negative electrode 11 for oxidizing hydrogen, and a solid electrolyte 13 located between the positive electrode 12 and the negative electrode 11, and a hydrogen generator (not shown) for supplying hydrogen to the negative electrode 11. As the hydrogen generator, e.g., the hydrogen generator in Embodiment 4 can be used.

Each member of the fuel cell 10 is not particularly limited as long as they can be used generally for a fuel cell.

The positive electrode 12 may be, e.g., a conductive material that supports a catalyst. Examples of the catalyst include platinum fine particles and fine particles of an alloy of platinum and at least one metal selected from iron, nickel, cobalt, tin, ruthenium, and gold. As the conductive material, e.g., a carbon material can be used mainly, such as carbon black, activated carbon, carbon nanotube and carbon nanohorn. In general, a catalyst supporting carbon can be used in which the catalyst is dispersed and supported on the surface of the conductive material. Moreover, the positive electrode 12 has a positive terminal 18.

The negative electrode 11 may be, e.g., a conductive material that supports a catalyst. Examples of the catalyst include platinum fine particles and fine particles of an alloy of platinum and at least one metal selected from ruthenium, indium, iridium, tin, iron, titanium, gold, silver, chromium, silicon, zinc, manganese, molybdenum, tungsten, rhenium, aluminum, lead, palladium, and osmium. As the conductive material, the same materials as those for the positive electrode can be used. Moreover, the negative electrode 11 has a negative terminal 17.

The solid electrolyte 13 is located between the positive electrode 12 and the negative electrode 11 and made of a material that does not have electron conductivity, but can transport protons. Examples of the material include a polyperfluorosulfonic acid resin film, a sulfonated polyethersulfonic acid resin film, a sulfonated polyimide resin film, a sulfuric acid-doped polybenzimidazole film, phosphoric acid-doped SiO₂ known as a solid electrolyte, a hybrid of a polymer and phosphoric acid-doped SiO₂, and a gel electrolyte obtained by impregnating a polymer and an oxide with an acid solution.

In the membrane electrode assembly, a diffusion layer 14 is arranged on the outside of each of the positive electrode 12 and the negative electrode 11. The diffusion layer 14 may be, e.g., a porous carbon material.

A positive separator 16 for supplying air (oxygen) is located on the side of the positive electrode 12, and a negative separator 15 for supplying hydrogen is located on the side of the negative electrode 11 in the membrane electrode assembly. The negative separator 15 communicates with the hydrogen generator that provides hydrogen.

By combining the fuel cell 10 with the hydrogen generator of the present invention, hydrogen is supplied efficiently from the metal material (hydrogen source), and therefore the fuel cell 10 using this hydrogen as a fuel can generate electric power efficiently. Moreover, since the hydrogen production reaction in the hydrogen generator involves water, the hydrogen gas generated includes a moderate amount of moisture and can be used preferably for the fuel cell using hydrogen as a fuel.

### Embodiment 6

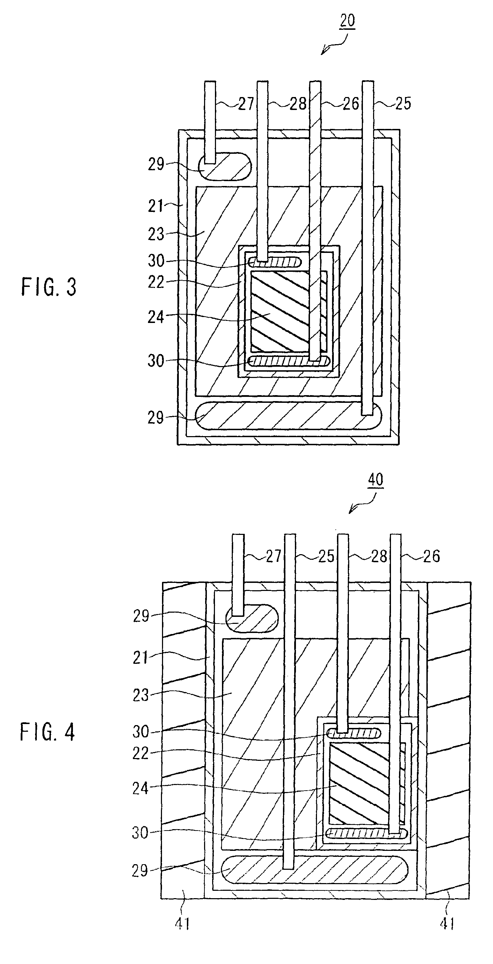

FIG. 3 is a schematic cross-sectional view showing another example of a hydrogen generator of the present invention. The hydrogen generator of FIG. 3 is in the form of a cartridge different from Embodiment 4.

A cartridge 20 of this embodiment includes an outer vessel 21, an inner vessel 22 and a hydrogen generating material 23 that are contained in the outer vessel 21, and a hydrogen generating material 24 that is contained in the inner vessel 22. The inner vessel 22 is surrounded by the hydrogen generating material 23.

The hydrogen generating materials 23 and 24 correspond to the hydrogen generating materials B and A in Embodiment 2, respectively. The outer vessel 21 includes a first inlet 25 for introducing water into the vessel and a first outlet 27 for discharging hydrogen from the vessel. The inner vessel 22 includes a second inlet 26 for introducing water into the vessel and a second outlet 28 for discharging hydrogen from the vessel. A water absorbing member 29 is arranged at the end of each of the first inlet 25 and the first outlet 27 inside the outer vessel 21. Similarly, a water absorbing member 30 is arranged at the end of each of the second inlet 26 and the second outlet 28 inside the inner vessel 22.

The hydrogen generating material 24 may include only the heat generating material without the metal material. In such a case, the second outlet 28 can be eliminated because no hydrogen is generated. Moreover, the hydrogen generating material 23 may include only the metal material.

The cartridge 20 with the above configuration can produce hydrogen efficiently, even if the amount of the heat generating material is reduced.
The reason for this will be described below.

In an example of the hydrogen production reaction in the cartridge 20 of this embodiment, first, an exothermic reaction of externally supplied water and the heat generating material included in the hydrogen generating material 24 occurs in the inner vessel 22. Then, heat generated in the inner vessel 22 is transferred to the hydrogen generating material 23 in the outer vessel 21. This heat transfer provides a starting point from which the reaction of water supplied to the outer vessel 21 and the hydrogen generating material 23 starts to produce hydrogen.

When the amount of heat generated in the inner vessel 22 is sufficiently large, hydrogen can be produced without including the heat generating material in the hydrogen generating material 23. Therefore, the amount of the heat generating material used in the entire cartridge 20 can be reduced. Even if the amount of the heat generating material is not reduced, both the time before starting the generation of hydrogen and the time required for maximizing the hydrogen generation rate can be reduced by making the content of the heat generating material higher in the hydrogen generating material 24 than in the hydrogen generating material 23, as described above.

In the cartridge 20 of this embodiment, the inner vessel 22 is surrounded by the hydrogen generating material 23. Therefore, the heat generated in the inner vessel 22 is transferred easily to the hydrogen generating material 23, so that the temperature of the metal material can be increased more efficiently. It is preferable that the inner vessel 22 is located substantially in the center of the outer vessel 21 and surrounded by the hydrogen generating material 23. It is more preferable that all the outside surfaces of the inner vessel 22 except the second inlet 26 and the second outlet 28 come into contact with the hydrogen generating material 23. This configuration can transfer the heat generated in the inner vessel 22 more efficiently to the hydrogen generating material 23.

In the cartridge 20 of this embodiment, the ratio of the weight of the hydrogen generating material 24 to the total weight of the hydrogen generating materials 23, 24 is preferably 3 wt% to 40 wt%, and more preferably 5 wt% to 15 wt%. By controlling the weight ratio of the hydrogen generating material 24 within these ranges, the balance between the hydrogen generation efficiency and the amount of hydrogen generated is improved.

The size and shape of the outer vessel 21 are not particularly limited. For example, the outer vessel 21 includes a lid and a main body. Since the outer vessel 21 is used as a reactor in which the hydrogen production reaction of the hydrogen generating material 23 and water takes place, it is desirable that the outer vessel 21 can be hermetically sealed to prevent leakage of the supplied water to the outside as well as escape of the generated hydrogen from the vessel other than the first outlet 27. A material suitable for the outer vessel 21 is substantially impermeable to water and hydrogen and also has heat resistance (high enough not to cause any failure, even if the vessel is heated, e.g., at about 120°C). Examples of the material include metals such as aluminum, titanium and nickel, resins such as polyethylene, polypropylene and polycarbonate, ceramics such as alumina, silica and titania, and heat-resistance glass. In particular, when the outer vessel 21 is made of at least one material selected from polyethylene, polypropylene, and polycarbonate, it can exhibit high thermal insulation performance and sufficient heat resistance.

The size and shape of the inner vessel 22 are not particularly limited. For example, the inner vessel 22 includes a lid and a main body. Since the inner vessel 22 is used as a reactor in which the reaction of the hydrogen generating material 24 and water takes place, it is desirable that the inner vessel 22 can be hermetically sealed to prevent leakage of the supplied water to the outside as well as escape of the generated hydrogen from the vessel other than the second outlet 28. A material suitable for the inner vessel 22 has heat resistance (high enough not to cause any failure, even if the vessel is heated, e.g., at about 120°C), and more preferably has high heat conductivity. Examples of the material include resins such as polyethylene, polypropylene and polycarbonate, ceramics such as alumina, silica and titania, heat-resistance glass, and metals. In particular, it is preferable to use at least one metal selected from aluminum, titanium, nickel, and iron.

In this embodiment, the first inlet 25, the first outlet 27, the second inlet 26, and the second outlet 28 are independent of each other. However, the present invention is not limited thereto. For example, if the first inlet 25 and the second inlet 26 are connected in part, it is not necessary to supply water separately to the outer vessel 21 and the inner vessel 22. When hydrogen is generated by the reaction of the hydrogen generating material 24, the first outlet 27 and the second outlet 28 may be connected in part, so that the hydrogen that comes out of the outer and inner vessels 21, 22 can be collected together.

Moreover, the first inlet 25 may be eliminated, and the inside of the inner vessel 22 may communicate with the inside of the outer vessel 21 1 through the second outlet 28. Accordingly, water supplied to the inner vessel 22 further can reach the hydrogen generating material 23 in the outer vessel 21. In such a case, the outer vessel 21 may have only the second inlet 26 and the first outlet 27, thus simplifying the structure. With this configuration, water that is supplied from the second inlet 26 first reacts with the hydrogen generating material 24 in the inner vessel 22 to generate heat, which can induce the hydrogen production reaction of the hydrogen generating material 23. Moreover, hydrogen, generated in the inner vessel 22 also can be transferred to the outer vessel 21 through the second outlet 28 along with the water supplied to the inner vessel 22. Therefore, the hydrogen generated in the inner vessel 22 and the hydrogen derived from the reaction of the hydrogen generating material 23 can be drawn together from the first outlet 27.

However, when many impurities such as basic mists are contained in the hydrogen that is discharged from the second outlet 28, it is desirable that the first outlet 27 and the second outlet 28 are independent of each other so that the hydrogen generated in the inner vessel 22 is not mixed with the hydrogen derived from the reaction of the hydrogen generating material 23. The use of hydrogen containing the basic mists, e.g., as a fuel of a fuel cell may degrade the solid electrolyte membrane. In this case, the basic mists include a base for accepting protons and are produced, e.g., when the heat generating material is a basic substance.

The cartridge of this embodiment as shown in FIG. 3 can provide hydrogen generated by the reaction of water and the hydrogen generating material 23 that has a lower content of the heat generating material, namely, hydrogen containing a smaller amount of the basic mists or the like as a fuel of a fuel cell. Therefore, it is possible to avoid the problem of degradation of the solid electrolyte membrane. When the inlets 25, 26 are used independently for the respective outer and inner vessels 21, 22, a reactant other than water (e.g., oxygen) also can be supplied to the inner vessel 22, and thus the heat generating material in the inner vessel 22 may be a metal powder such as iron powder that reacts with oxygen to generate heat.

### Embodiment 7

FIG. 4 is a schematic cross-sectional view showing yet another example of a hydrogen generator of the present invention. The hydrogen generator of FIG. 4 is in the form of a cartridge different from Embodiment 6.

A cartridge 40 of this embodiment includes an outer vessel 21, an inner vessel 22 and a hydrogen generating material 23 that are contained in the outer vessel 21, a hydrogen generating material 24 that is contained in the inner vessel 22, and a heat insulator 41. The inner vessel 22 is located with its one side coming into contact with the inside surface of one side of the outer vessel 21. The heat insulator 41 is located around the periphery of the outer vessel 21.

The material and shape of the heat insulator 41 are not particularly limited. For example, a porous heat insulating material such as styrofoam or polyurethane foam, or a sheet of a heat insulating material with a vacuum insulation structure can be used appropriately. The other configurations are similar to those of the cartridge 20 in Embodiment 6. In FIG. 4, the same components as those in FIG. 3 are denoted by the same reference numeral, and the explanation will not be repeated.

In the cartridge 40 of this embodiment, the inner vessel 22 is located in contact with the outer vessel 21. Therefore, heat generated in the inner vessel 22 is transferred quickly to the entire outer vessel 21, and the temperature of the whole hydrogen generating material 23 can be increased more efficiently. The larger the contact area between the inner vessel 22 and the outer vessel 21 is, the more efficiently the heat is transferred. In this case, both the outer vessel 21 and the inner vessel 22 are preferably made of a high heat-conductive material such as metal, and the materials for the two vessels may be either the same or different. Since the heat insulator 41 is located around the periphery of the outer vessel 21, the heat transferred to the outer vessel 21 is not likely to be dissipated to the outside and can be accumulated inside the vessel.

Hereinafter, the present invention will be described in detail by way of examples. The present invention is not limited to the following examples.

### Working Example 1

A hydrogen generating material A (a content of the heat generating material: 50 wt%) was prepared by mixing 0.5 g of aluminum powder (with an average particle size of 3 µm) and 0.5 g of calcium oxide powder (with an average particle size of 40 µm) in a mortar. A hydrogen generating material B (a content of the heat generating material: 5 wt%) was prepared by mixing 3.8 g of the aluminum powder and 0.2 g of the calcium oxide powder in a mortar.

Next, 0.05 g of absorbent cotton (water absorbing member) was placed in an aluminum can (8 mm length, 34 mm width, 50 mm height). Then, 1 g of the hydrogen generating material A and 4 g of the hydrogen generating material B were filled into the aluminum can in a slanting position, as shown in FIG. 1. As a partitioning material, aluminum foil was arranged between the hydrogen generating materials A and B. Moreover, 0.05 g of absorbent cotton (water absorbing member) was put on the hydrogen generating material B. The proportions of the hydrogen generating material A and the aluminum powder in the whole hydrogen generating material were 20 wt% and 86 wt%, respectively.

Subsequently, the aluminum can was covered with an aluminum plate that had a water inlet pipe made of aluminum and used for introducing water and a hydrogen outlet pipe made of aluminum and used for discharging hydrogen. The end of the water inlet pipe was located near the hydrogen generating material A, thus providing a hydrogen generator as shown in FIG. 1.

Next, the water inlet pipe was connected to a pump for supplying water to the hydrogen generating materials A, B. The pump fed water into the aluminum can at 0.17 ml/min. Thus, the water first reacted with the heat generating material (calcium oxide powder) included in the hydrogen generating material A, and then the heat of reaction caused the aluminum powder included in the hydrogen generating materials A, B to start reacting with water to generate hydrogen. At a temperature of 25°C, water was supplied until no hydrogen was generated, and hydrogen that flowed through the hydrogen outlet pipe was collected while measuring the surface temperature of the aluminum can. A water-displacement method was used to collect the hydrogen.

The volume of the collected hydrogen was measured as an amount of hydrogen generated. Using a theoretical amount of hydrogen generated (1360 ml) per 1 g of aluminum at 25°C and 1 atm as a reference, the ratio of the weight of the aluminum used to the theoretical amount of hydrogen generated was determined as a reaction rate of the aluminum. Moreover, the hydrogen generation rate was calculated from a change in the amount of hydrogen generated over time, thereby determining the time it took for the hydrogen generation rate to reach a maximum.

During the test, the temperature (surface temperature) of the aluminum can, i.e., the reaction temperature of the hydrogen generating material was increased to a maximum of 95°C. On the other hand, hydrogen was generated continuously at a substantially constant generation rate. It was also confirmed that when the supply of water was stopped, the hydrogen generation was stopped after several minutes.

### Working Example 2

A hydrogen generator was produced in the same manner as Working Example 1 except that a hydrogen generating material A (a content of the heat generating material: 35 wt%) was prepared by mixing 0.65 g of the aluminum powder and 0.35 g of the calcium oxide powder in a mortar, and a hydrogen generating material B (a content of the heat generating material: 8.75 wt%) was prepared by mixing 3.65 g of the aluminum powder and 0.35 g of the calcium oxide powder in a mortar. The proportions of the hydrogen generating material A and the aluminum powder in the whole hydrogen generating material were 20 wt% and 86 wt%, respectively. Moreover, hydrogen was generated in the same manner as Working Example 1.

### Working Example 3

A hydrogen generator was produced in the same manner as Working Example 1 except that a hydrogen generating material A (a content of the heat generating material: 30 wt%) was prepared by mixing 0.7 g of the aluminum powder and 0.3 g of the calcium oxide powder in a mortar, and a hydrogen generating material B (a content of the heat generating material: 10 wt%) was prepared by mixing 3.6 g of the aluminum powder and 0.4 g of the calcium oxide powder in a mortar. The proportions of the hydrogen generating material A and the aluminum powder in the whole hydrogen generating material were 20 wt% and 86 wt%, respectively. Moreover, hydrogen was generated in the same manner as Working Example 1.

### Working Example 4

A hydrogen generator was produced in the same manner as Working Example 1 except that a hydrogen generating material B (a content of the heat generating material: 5 wt%) was prepared by mixing 3.55 g of the aluminum powder, 0.2 g of the calcium oxide powder, and 0.25 g of alumina (with an average particle size of 1 µm) in a mortar. The proportions of the hydrogen generating material A and the aluminum powder in the whole hydrogen generating material were 20 wt% and 81 wt%, respectively. Moreover, hydrogen was generated in the same manner as Working Example 1.

### Comparative Example 1

A hydrogen generator was produced in the same manner as Working Example 1 except that a hydrogen generating material (a content of the heat generating material: 14 wt%) was prepared by mixing 4.3 g of the aluminum powder and 0.7 g of the calcium oxide powder in a mortar, and this hydrogen generating material was filled uniformly into the aluminum can. Moreover, hydrogen was generated in the same manner as Working Example 1.

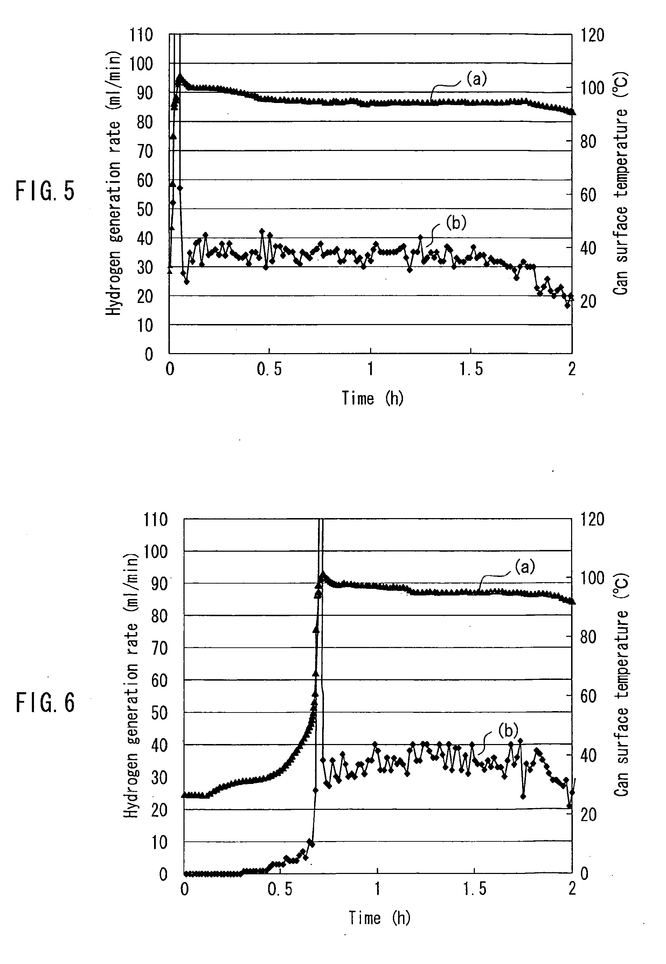

Table 1 shows the configurations of the hydrogen generating materials in Working Examples 1 to 4 and Comparative Example 1. With respect to each of the hydrogen generating materials, Table 2 shows the reaction rate of aluminum in the hydrogen production reaction and the time required for maximizing the hydrogen generation rate. FIGS. 5 and 6 are graphs showing (a) a change in the surface temperature of the aluminum can (vessel) over time and (b) a change in the hydrogen generation rate over time in the hydrogen generators of Working Example 1 and Comparative Example 1, respectively

**TABLE 1**

| | Content of heat generating material (wt%) | | Proportion of hydrogen generating material A (wt%) | Proportion of Al in the whole hydrogen generating material (wt%) | Average particle size of Al powder (µm) | Proportion ofAl particles with a particle size of 60 µm or less (wt%) |
|---|---|---|---|---|---|---|
| | Hydrogen generating material A | Hydrogen generating material B | | | | |
| Working Example 1 | 50 | 5 | 20 | 86 | 3 | 100 |
| Working Example 2 | 35 | 8.75 | 20 | 86 | 3 | 100 |
| Working Example 3 | 30 | 10 | 20 | 86 | 3 | 100 |
| Working Example 4 | 50 | 5 | 20 | 81 | 3 | 100 |
| Comparative Example 1 | - | - | - | 86 | 3 | 100 |

**TABLE 2**

| | Reaction rate of aluminum (%) | Time required for maximizing the hydrogen generation rate (min) |
|---|---|---|
| Working Example 1 | 65 | 1 |
| Working Example 2 | 64 | 2 |
| Working Example 3 | 64 | 3 |
| Working Example 4 | 68 | 1 |
| Comparative Example 1 | 64 | 40 |

In Working Examples 1 to 4, hydrogen was generated at a reaction rate of more than 60%, and the time required for maximizing the hydrogen generation rate was as short as 3 minutes or less. Therefore, the reaction reached a steady state in a short time from the beginning of water supply, and hydrogen was drawn stably. In Comparative Example 1, in which the aluminum powder and the heat generating material were mixed uniformly, although the generation of hydrogen was observed like Working Examples 1 to 4, the time required for maximizing the hydrogen generation rate was long, i.e., 40 minutes. Thus, it took a long time before the reaction reached a steady state and hydrogen was drawn stably.

As shown in FIGS. 5 and 6, the surface temperature of the aluminum can was raised in a short time in Working Example 1, compared to Comparative Example 1. This is because water is supplied first to the hydrogen generating material A having a higher content of the heat generating material, so that a sufficient amount of heat for starting the reaction of the metal material (aluminum powder) and water is applied to the aluminum powder. Thus, the hydrogen production reaction may be accelerated.

Comparing Working Examples 1 to 3 shows that the time required for maximizing the hydrogen generation rate depends on the content of the heat generating material in the hydrogen generating material A. This is because the heat of reaction is increased with an increase in the heat generating material, and the reaction of the aluminum powder and water may be accelerated further. In contrast, the reaction rate of aluminum does not depend on the content of the heat generating material in the hydrogen generating material A and is substantially the same. Accordingly, it is considered that the particle size or shape of the aluminum powder may have a greater effect on the reaction rate than the content of the heat generating material.

Due to the addition of alumina, the proportion of the metal material in the hydrogen generating material is lower in Working Example 4 than in Working Example 1. However, since the alumina accelerates the hydrogen production reaction, the reaction rate is higher than that of Working Example 1, and the time required for maximizing the hydrogen generation rate is the same as that of Working Example 1. This is because the bond (binding) of the metal material and the reaction product may be suppressed by adding the alumina.

### Working Example 5

10 parts by weight of platinum supporting carbon that supports 50 wt% of platinum, 80 parts by weight of a polyperfluorosulfonic acid resin solution ("NAFION" manufactured by Sigma-Aldrich, Inc.), and 10 parts by weight of water were stirred sufficiently and dispersed uniformly to form an electrode paste. The electrode paste was applied on a PTFE film and then dried, resulting in a positive electrode.

Nest, a negative electrode was prepared in the same manner as the positive electrode except that platinum-ruthenium alloy supporting carbon that supports 54 wt% of alloy of platinum and ruthenium (the molar ratio of Pt to Ru was 2 : 3) was used instead of the platinum supporting carbon of the positive electrode.

As a solid electrolyte, a polyperfluorosulfonic acid resin film ("NAFION 112" manufactured by DuPont. Co.) was prepared.

Next, the solid electrolyte was located between the surface of the positive electrode coated with the electrode paste and the surface of the negative electrode coated with the electrode paste, which then were joined together by hot pressing. Subsequently, the PTFE films were removed from the positive and negative electrodes, and a carbon paper was arranged as a diffusion layer on the surface of each electrode from which the PTFE film had been removed, thus providing a membrane electrode assembly. Moreover, the positive electrode had a positive terminal, and the negative electrode had a negative terminal.

A separator for supplying air (oxygen) was located on the side of the positive electrode, and a separator for supplying hydrogen was located on the side of the negative electrode in the membrane electrode assembly Thus, a fuel cell was provided, as shown in FIG. 2. This fuel cell was combined with the hydrogen generator of Working Example 1, and hydrogen produced by the hydrogen generator was fed to the negative electrode of the fuel cell through the hydrogen outlet pipe. Consequently, a high output of 200 mW/cm² was obtained at 25°C. The hydrogen generator including the hydrogen generating material of the present invention was small in size, suitable for carrying, and also useful for a fuel source of a fuel cell.

### Working example 6

0.01 g of absorbent cotton (water absorbing member) was placed in an aluminum can (5 mm length, 18 mm width, 20 mm height) that served as an inner vessel. Then, 0.8 g of hydrogen generating material, which was the same as the hydrogen generating material A in Working Example 1, was filled into the inner vessel, and 0.01 g of absorbent cotton (water absorbing member) was put on the hydrogen generating material A. Subsequently, the inner vessel was sealed with an aluminum lid that had a water inlet pipe (second inlet) made of aluminum and used for introducing water and a hydrogen outlet pipe (second outlet) made of aluminum and used for discharging hydrogen.

A hydrogen generating material B was prepared by mixing 4.0 g of aluminum powder (with an average particle size of 3 µm) and 0.3 g of calcium oxide powder (with an average particle size of 40 µm) in a mortar. Next, as shown in FIG. 3, 0.05 g of absorbent cotton (water absorbing member) was placed in an aluminum can (8 mm length, 34 mm width, 50 mm height) that served as an outer vessel. Then, both the hydrogen generating material B and the inner vessel were placed in the outer vessel so that the inner vessel was surrounded by the hydrogen generating material B and located in the center of the outer vessel. Moreover, 0.05 g of absorbent cotton (water absorbing member) was put on the hydrogen generating material B. Finally, the outer vessel was sealed with an aluminum lid that had a water inlet pipe (first inlet) made of aluminum and used for introducing water and a hydrogen outlet pipe (first outlet) made of aluminum and used for discharging hydrogen. Thus, a hydrogen generator was provided.

Next, 1 ml of water was supplied from the second inlet to the inner vessel by using a syringe, so that the water reacted with the heat generating material (calcium oxide powder) included in the hydrogen generating material A to generate heat. Moreover, while water was supplied from the first inlet to the outer vessel at a rate of 0.17 ml/min by using a pump, the heat generated in the inner vessel caused the metal material (aluminum powder) included in the hydrogen generating material B to react with the water to generate hydrogen. The hydrogen thus generated was taken out of the vessel through the first outlet and collected by a water-displacement method. Subsequently, the reaction rate of aluminum and the time required for maximizing the hydrogen generation rate were determined in the same manner as Working Example 1. During the test, the temperature (surface temperature) of the outer vessel was increased to a maximum of 95°C. On the other hand, hydrogen was generated continuously at a substantially constant generation rate. It was also confirmed that when the supply of water was stopped, the hydrogen generation was stopped after several minutes.

A cold trap was arranged between the hydrogen outlet pipe (first outlet) of the outer vessel and the water-displacement device to collect basic mists. The basic mists generated were cooled and collected in the liquid state by the cold trap, and then the liquid was subjected to neutralization titration. Thus, the number of moles of the basic mists, i.e., OH⁻ in the water vapor containing OH⁻ ions was calculated. In the neutralization titration, a hydrochloric acid standard solution (concentration: 1.0 × 10⁻³ mol/l) was used as an acid, and phenolphthalein was used as an indicator.

### Comparative Example 2

In the hydrogen generation test with the hydrogen generator of Comparative Example 1, basic mists included in a hydrogen gas were collected, and the amount of the basic mists was measured in the same manner of Working Example 6.

Table 3 shows the configurations of the hydrogen generating materials in Working Example 6 and Comparative Example 2. With respect to each of the hydrogen generating materials, Table 4 shows the reaction rate of aluminum in the hydrogen production reaction, the time required for maximizing the hydrogen generation rate, and the number of moles of the basic mists (OH- ions) collected.

**TABLE 3**

| | Content of heat generating material (wt%) | | Proportion of hydrogen generating material A (wt%) | Proportion of Al in the whole hydrogen generating material (wt%) | Average particle size ofAl powder (µm) | Proportion of Al particles with a particle size of 60 µm or less (wt%) |
|---|---|---|---|---|---|---|
| | Hydrogen generating material A | Hydrogen generating material B | | | | |
| Working Example 6 | 50 | 7 | 16 | 86 | 3 | 100 |
| Comparative Example 2 | - | - | - | 86 | 3 | 100 |

**TABLE 4**

| | Reaction rate of aluminum (%) | Time required for maximizing the hydrogen generation rate (min) | Number of moles of basic mists (µmol) |
|---|---|---|---|
| Working Example 6 | 65 | 3 | 6 |
| Comparative Example 2 | 64 | 40 | 15 |

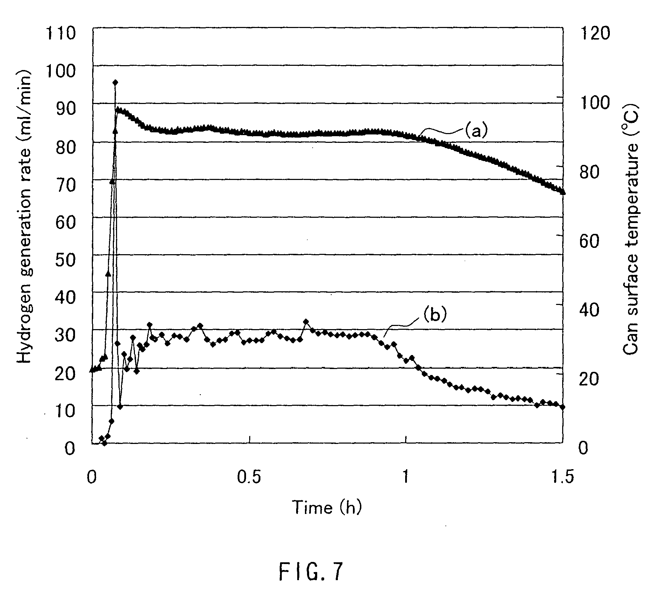

FIG. 7 is a graph showing (a) a change in the surface temperature of the outer vessel over time and (b) a change in the hydrogen generation rate over time in the hydrogen generator of Working Example 6.

In the hydrogen generator of Working Example 6, as shown in Table 4 and FIG. 7, hydrogen was generated at a reaction rate of more than 60%, the reaction reached a steady state in a short time from the beginning of water supply, and hydrogen was drawn stably, as with the hydrogen generators of Working Examples 1 to 4.

The hydrogen generator of Working Example 6 can collect only hydrogen derived from the reaction of the hydrogen generating material (hydrogen generating material B) having a lower content of the heat generating material (calcium oxide) that is a basic substance. Therefore, the amount of the basic mists in the hydrogen gas can be reduced, compared to the hydrogen gas generated in the hydrogen generator of Comparative Example 1. In the hydrogen generator of Working Example 6, the hydrogen generating material having a high content of the basic substance is placed in a separate vessel, so that scattering of the basic mists can be reduced.

The invention may be embodied in other forms without departing from the spirit or essential characteristics thereof. The embodiments disclosed in this application are to be considered in all respects as illustrative and not limiting. The scope of the invention is indicated by the appended claims rather than by the foregoing description, and all changes which come within the meaning and range of equivalency of the claims are intended to be embraced therein.

### Industrial Applicability

As described above, the hydrogen generating material of the present invention can increase the content of the metal material that serves as a hydrogen source, and thus allows hydrogen to be produced efficiently. Therefore, the hydrogen generating material can be used widely as a fuel source of a fuel cell, particularly for the fuel cell of small portable equipment.

## Claims

1. A hydrogen generating material comprising:
a metal material that reacts with water to generate hydrogen; and
a heat generating material that reacts with water to generate heat and is a material other than the metal material,
wherein the heat generating material is unevenly distributed with respect to the metal material.

2. The hydrogen generating material according to claim 1, having a plurality of regions that differ in content of the heat generating material.

3. The hydrogen generating material according to claim 2, wherein the content of the heat generating material is 30 wt% to 80 wt% in a region with the highest content of the heat generating material.

4. The hydrogen generating material according to claim 3, wherein a proportion of the region with the highest content of the heat generating material is 3 wt% to 40 wt% of the whole hydrogen generating material.

5. The hydrogen generating material according to claim 3, having a region where the content of the heat generating material is 15 wt% or less.

6. The hydrogen generating material according to claim 1 or 2, wherein the hydrogen generating material is in the form of pellets or granules.

7. The hydrogen generating material according to claim 1 or 2, wherein the content of the heat generating material present in any one of locations selected from an end portion, a core portion, and a surface portion of the hydrogen generating material is higher than that of the heat generating material present in the other locations.

8. The hydrogen generating material according to claim 1 or 2, wherein a content of the metal material in the whole hydrogen generating material is 85 wt% to 99 wt%.

9. The hydrogen generating material according to claim 1 or 2, wherein the metal material is at least one metal selected from the group consisting of aluminum, silicon, zinc, and magnesium or an alloy composed mainly of the at least one metal.

10. The hydrogen generating material according to claim 1 or 2, wherein the metal material comprises particles with a particle size of 0.1 µm to 60 pin in a proportion of 80 vol% or more.

11. The hydrogen generating material according to claim 1 or 2, wherein the metal material comprises particles with an average particle size of 0.1 µm to 30 µm.

12. The hydrogen generating material according to claim 1 or 2, wherein the metal material is in the form of a flake.

13. The hydrogen generating material according to claim 12, wherein the metal material has a thickness of 0.1 µm to 5 µm.

14. The hydrogen generating material according to claim 1 or 2, wherein the heat generating material is at least one selected from the group consisting of a calcium oxide, a magnesium oxide, a calcium chloride, a magnesium chloride, and a calcium sulfate.

15. The hydrogen generating material according to claim 1 or 2, further comprising at least one selected from the group consisting of a hydrophilic oxide, carbon, and a water absorbing polymer.

16. The hydrogen generating material according to claim 15, wherein the hydrophilic oxide comprises at least one oxide selected from the group consisting of alumina, boehmite, silica, magnesia, zirconia, zeolite, and a zinc oxide.

17. A hydrogen generator comprising:
a hydrogen generating material; and
a vessel containing the hydrogen generating material,
wherein the hydrogen generating material comprises a metal material that reacts with water to generate hydrogen, and a heat generating material that reacts with water to generate heat and is a material other than the metal material, and
the heat generating material is unevenly distributed with respect to the metal material.

18. The hydrogen generator according to claim 17, wherein the hydrogen generating material has a plurality of regions that differ in content of the heat generating material.

19. The hydrogen generator according to claim 18, wherein the content of the heat generating material is 30 wt% to 80 wt% in a region with the highest content of the heat generating material.

20. The hydrogen generator according to claim 19, wherein a proportion of the region with the highest content of the heat generating material is 3 wt% to 40 wt% of the whole hydrogen generating material.

21. The hydrogen generator according to claim 19, wherein the hydrogen generating material has a region where the content of the heat generating material is 15 wt% or less.

22. The hydrogen generator according to claim 17 or 18, wherein the hydrogen generating material is in the form of pellets or granules.

23. The hydrogen generator according to claim 17 or 18, wherein the content of the heat generating material present in any one of locations selected from an end portion, a core portion, and a surface portion of the hydrogen generating material is higher than that of the heat generating material present in the other locations.

24. The hydrogen generator according to claim 17 or 18, wherein a content of the metal material in the whole hydrogen generating material is 85 wt% to 99 wt%.

25. The hydrogen generator according to claim 17 or 18, wherein the metal material is at least one metal selected from the group consisting of aluminum, silicon, zinc, and magnesium or an alloy composed mainly of the at least one metal.

26. The hydrogen generator according to claim 17 or 18, wherein the metal material comprises particles with a particle size of 0.1 µm to 60 µm in a proportion of 80 vol% or more.

27. The hydrogen generator according to claim 17 or 18, wherein the metal material comprises particles with an average particle size of 0.1 µm to 30 µm.

28. The hydrogen generator according to claim 17 or 18, wherein the metal material is in the form of a flake.

29. The hydrogen generator according to claim 28, wherein the metal material has a thickness of 0.1 µm to 5 µm.

30. The hydrogen generator according to claim 17 or 18, wherein the heat generating material is at least one selected from the group consisting of a calcium oxide, a magnesium oxide, a calcium chloride, a magnesium chloride, and a calcium sulfate.

31. The hydrogen generator according to claim 17 or 18, wherein the hydrogen generating material further comprises at least one selected from the group consisting of a hydrophilic oxide, carbon, and a water absorbing polymer.

32. The hydrogen generator according to claim 31, wherein the hydrophilic oxide comprises at least one oxide selected from the group consisting of alumina, boehmite, silica, magnesia, zirconia, zeolite, and a zinc oxide.

33. The hydrogen generator according to claim 17 or 18, wherein the vessel comprises an inlet A for introducing water into the vessel and an outlet B for discharging hydrogen from the vessel.

34. The hydrogen generator according to claim 17 or 18, wherein the heat generating material is arranged so that water is supplied first to a region with the highest content of the heat generating material when water is introduced into the vessel.

35. The hydrogen generator according to claim 17, wherein the vessel accommodates another inner vessel, and the inner vessel contains the heat generating material and comprises an inlet C for introducing water into the inner vessel.

36. The hydrogen generator according to claim 35, wherein the inner vessel further contains the metal material.

37. The hydrogen generator according to claim 36, wherein a content of the heat generating material with respect to a total amount of the heat generating material and the metal material contained in the inner vessel is higher than that of the heat generating material in the whole hydrogen generating material present outside the inner vessel.

38. The hydrogen generator according to claim 37, wherein the content of the heat generating material in the whole hydrogen generating material present outside the inner vessel is 1 wt% to 15 wt%.
